# EUROPEAN PATENT SPECIFICATION

(11) **EP 1 193 605 B1**
(45) Date of publication and mention of the grant of the patent: **12.05.2004**
(21) Application number: 01000500.7
(22) Date of filing: 26.09.2001
(51) Int. Cl.: G06F 13/28

(54) **Apparatus and method for the transfer of signal groups between digital signal processors in a digital signal processing unit**
Gerät und Verfahren zur Signalgruppenübertragung zwischen Einrichtungen zur digitalen Signalverarbeitung
Dispositif et méthode de transfert de groupes de signaux entre processeurs de traitement numérique de signaux

(30) Priority: 27.09.2000 US 670663
(43) Date of publication of application: 03.04.2002
(73) Proprietor: Texas Instruments Incorporated, Dallas, Texas 75251 (US)
(72) Inventor: Smith , Patrick J., Texas 77027, Houston (US); Jones, Jason A., Texas 77057, Houston (US); McGonagle, Kevin A., Texas 77063, Houston (US)
(74) Representative: Holt, Michael

(56) References cited:
- EP-A- 0 333 537
- EP-A- 0 901 081
- US-A- 5 535 417
- US-A- 5 685 005

## Description

### RELATED APPLICATIONS

U.S. Patent Application Serial No. 09/670,663: APPARATUS AND METHOD FOR ACTIVATION OFA DIGITAL SIGNAL PROCESSOR IN AN IDLE MODE FOR INTERPROCESSOR TRANSFER OF SIGNAL GROUPS IN A DIGITAL SIGNAL PROCESSING UNIT; invented by Patrick J. Smith, Jason A. Jones, and Kevin A. McGonagle; filed contemporaneously herewith and assigned to the assignee of the present application: U.S. Patent Application Serial No. 09/670,665; APPARATUS AND METHOD FOR A HOST PROCESSOR INTERFACE UNIT IN A DIGITAL SIGNAL PROCESSING UNIT; invented by Patrick J. Smith, and Jason A. Jones; filed contemporaneously herewith and assigned to the assignee of the present invention. U.S. Patent Application Serial No. 09/670,666; APPARATUS AND METHOD FOR THE EXCHANGE OF SIGNAL GROUPS BETWEEN A PLURALITY COMPONENTS AND A DIRECT MEMORY ACCESS CONTROLLER IN A DIGITAL SIGNAL PROCESSSOR; invented by Patrick J. Smith, Jason A. Jones, Kevin A. McGonagle, and Tai H. Nguyen; filed contemporaneously herewith and assigned to the assignee of the present application. U.S. Patent Application Serial No. 09/670,667; APPARATUS AND METHOD FOR A SORTING MODE IN A DIRECT MEMORY ACCESS CONTROLLER OF A DIGITAL SIGNAL PROCESSOR; invented by Patrick J. Smith and Tai H. Nguyen; filed contemporaneously herewith and assigned to the assignee of the present application: and U.S. Patent Application Serial No. 09/670,668; APPARATUS AND METHOD FOR ADDRESS MODIFICATION IN A DIRECT MEMORY ACCESS CONTROLLER; invented by Patrick J. Smith; filed contemporaneously herewith and assigned to the assignee of the present application are related applications.

### TECHNICAL FIELD OF THE INVENTION

This invention relates generally to the data processing apparatus and, more particularly, to the specialized high performance processor units generally referred to as digital signal processing units. The invention relates specifically to the exchange of data between digital signal processors in the same digital signal processing unit.

### BACKGROUND OF THE INVENTION

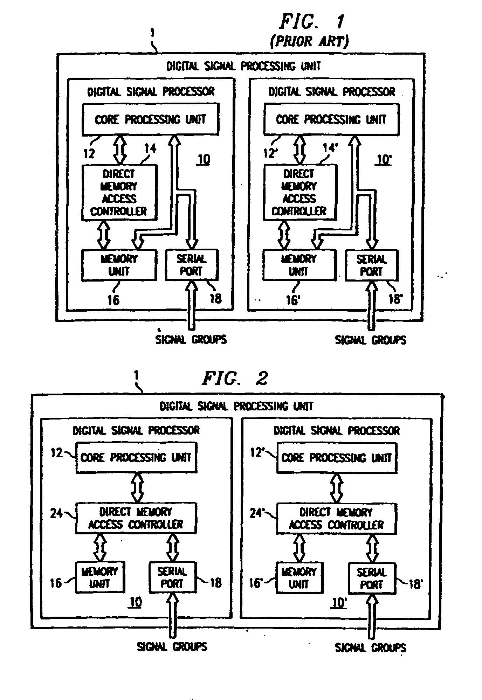

Referring to Fig. 1, a digital signal processing unit 1 having two digital signal processors, according to the prior art, is shown. A first digital signal processor 10 includes a core processing unit 12 (frequently referred to as a processing core), a direct memory access unit 14, a memory unit or memory units 16, and a serial port or serial ports 18. The memory unit 16 stores the signal groups that are to be processed or that assist in the processing of the signal groups to be processed by the core processing unit 12. The core processing unit 12 performs the bulk of the processing of signal groups in the memory unit. The direct memory access unit 14 is coupled to the core processing unit 12 and to memory unit 16 and mediates the signal group exchange therebetween. The serial port 18 exchanges signal groups with components external to the digital signal processing unit 1. The core processing unit 12 is coupled to the serial port 18 and to the memory unit 16 and controls the exchange of signal groups between these components. Fig. 1 also includes a second digital signal processor 10'. The second digital signal processor 10' is a replica of the first digital signal processor 10 and includes a core processing unit 12', a direct memory access unit 14', a memory unit 16', and a serial port 18'. The functionality of the components of the digital signal processors 10 and 10' is the same.

The digital signal processor is typically designed and implemented to have limited processing functionality, but that functionality includes processing procedures that must be performed repeatedly and be performed very rapidly. The fast Fourier transform (FFT) processing and the Viterbi algorithm decoding are two examples where digital signal processors have been utilized to great advantage. To insure that the digital signal processors operate with high efficiency, the core processing is generally optimized for the performance of the limited functionality. Part of the optimization process involves the off-loading, to the extent possible, any processing not directed toward the optimized processing procedures. For example, the exchange of signal groups between the core processing unit 12, 12' and the memory unit 16, 16' is controlled by the direct memory access controller 14, 14'. The control of the exchange of signal groups involves the assignment of addressing functions for the memory unit to the direct memory access controller.

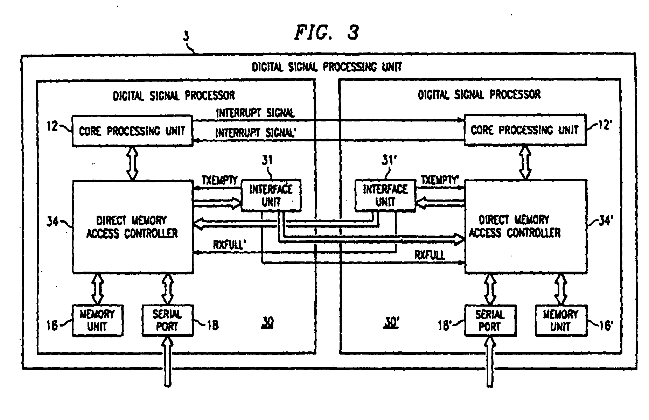

To relieve the core processing unit of the processing required to transfer the signal groups between the serial port 18, 18' and the memory unit 16, 16' this control of this activity has been transferred to the direct memory access controller 24, 24'. Referring to Fig. 2, a block diagram of the digital signal processing unit in which the control of the signal group transfer between the memory unit 16, 16' and the serial port 18, 18' is shown. This embodiment of a digital signal processor is described in the copending Patent Application entitled APPARATUS AND METHOD FOR THE EXCHANGE OF SIGNAL GROUPS BETWEEN A PLURALITY COMPONENTS AND A DIRECT MEMORY ACCESS CONTROLLER IN A DIGITAL SIGNAL PROCESSSOR, cited above. The digital signal processors 10, 10' have a core processing unit 12, 12', a direct memory access control unit 24, 24' a memory unit 16, 16' and a serial port 18, 18', the same components as in the prior art digital signal processors shown in Fig. 1. The difference between the embodiments in Fig. 1 and Fig 2 is as follows. In Fig. 1, the direct memory access controllers 14, 14' control the exchange of signal groups between the memory unit 16, 16' and the core processing unit 12, 12'. In Fig. 2, the direct memory access controller 24, 24' controls not only the exchange of signal groups between the memory unit 16, 16' and the core processing unit, but also between the memory unit 16, 16' and the serial port 18, 18'. With this implementation, the core processing unit 12, 12' is relieved of further processing responsibilities, as compared to the implementation shown in Fig. 1. Thus, the core processing unit 12, 12' can consequently be further optimized for specific processing operations. The direct memory access controller 24, 24' can be analogized to a plurality of controllable switches. The switches provide controllable channels for the transfer of signals between components. (In the preferred embodiment of the digital signal processors, typically two memory units and two serial ports are present. Consequently, a larger number of channels can be used. In the preferred embodiment, six channels are available in the direct memory access controller 24, 24'.)

In the digital signal processing unit having a plurality of digital signal processors 10, 10' included therewith, situations can arise in which the transfer of signal groups between the digital signal processors 10, 10' would be advantageous. For example, in situations where each digital signal processor is performing part of a complex processing operation, the results, i.e., in the form of signal groups, generated by of the processing operation performed by one digital signal processor may be required by a second digital signal processor for a second processing operation.

In the past, such a transfer of signal groups would be performed by components outside of the digital signal processing unit 1, i.e., would have to be performed by apparatus not included in the chip on which the digital signal processing unit 1 is fabricated. For example, the signal groups to be transferred from a first digital signal processor 10 to digital signal processor 10' are exported from the digital signal processing unit 1 by the serial port 18 of the digital signal processor 10. The signal groups are then imported to the digital signal processing unit 1 through the serial port 18'.

Serial port 18' is part of digital signal processor 10', the processor requiring the signal groups. As will be clear, not only is this transfer complex, requiring extensive external coordination between digital signal processors 10, 10' that are fabricated on the same chip, but the transfer could require a relatively long amount of time, thereby reducing the efficiency of the digital signal processing unit.

US5685005 discloses a data processing system comprising a first digital signal processor communicating to a second digital signal processor wherein the DMA contoller of the first digital signal processor is connected to the DMA controller of the second digital signal processor. Each digital processing unit comprises a core processing unit, a memory unit, at least one serial port and an interface unit.

A need has been felt for apparatus and an associated method that has as a feature the exchange of signal groups from the memory unit of a first digital signal processor to the memory unit of a second digital signal processor in the same digital signal processing unit. It would a further feature of the apparatus and associated method that the transfer of signals between the digital signal processors would not leave the digital signal processing unit 1 of which the digital signal processors 10 and 10' are components. It would be yet another feature of the apparatus and associated method to provide that the transfer of a signal groups from one digital signal processor to a second digital signal processor is implemented with the minimum interaction with either core processing unit. It would be yet a more specific feature of the apparatus and associated method to provide an interface unit with each digital signal processor to facilitate the transfer of signal groups between two digital signal processors of the same digital signal processing unit.

### SUMMARY OF THE INVENTION

The aforementioned and other features are accomplished by the present invention which is defined by an apparatus according to claim 1 and a method according to claim 8. The invention provides an interface unit with each digital signal processor in a digital signal processor. The interface unit provides temporary storage for signal groups to be transferred between the digital signal processors. The interface unit receives signal groups from memory unit through the direct memory access controller in the digital signal processor storing the signal groups and applies the signal groups through the direct memory access unit to the memory unit of the digital signal processor requiring the signal groups. The interface unit applies a first control signal to direct memory access controller with which interface unit is associated when the interface unit is ready to receive signal groups from the associated memory. The interface unit in the digital signal processor transmitting the signal groups applies a second control signal to the direct memory access controller associated with the digital signal processor receiving the signal groups. The second control signal indicates that the signal groups stored in the interface unit are ready to be transferred. The transfer of signal groups is initiated by an interrupt signal from the digital signal processor requiring the signal groups to the digital signal processing unit storing the signal groups.

### BRIEF DESCRIPTION OF THE DRAWINGS

For a more complete understanding of the present invention, and the advantages thereof, reference is now made to the following detailed description of certain particular and illustrative embodiments and the features and aspects thereof, by way of example only, and with reference to the figures of the accompanying drawings in which:
Figure 1 is a block diagram of a digital signal processing unit having two digital signal processors according to the prior art.
Fig. 2 is a block diagram of the digital signal processing unit capable of advantageously using the present invention.
Figure 3 is a more detailed block diagram of the principal components of the digital signal processing unit illustrating the principal components which the present invention is implemented.
Figure 4 is a block diagram of the principal components of the direct memory access controller capable of implementing the present invention.
Figure 5 is a block diagram of digital signal processing unit illustrating a second embodiment of the present invention.
Figure 6 illustrates the operation of the channel units of the direct memory access unit.
The use of the same reference symbols in different drawings indicates similar of identical items.

### DESCRIPTION OF THE PREFERRED EMBODIMENT

Fig. 1 and Fig. 2 have been described with reference to the background of the present invention.

Referring to Fig. 3, a digital signal processing unit 3 having two digital signal processors 30 and 30', implemented in a manner similar to the digital signal processors 20, 20', in Fig. 2 is shown. In addition, however, each digital signal processing unit 30 and 30' now includes an interface unit 31 and 31' respectively. Each interface unit 31 and 31' is coupled to and can receive signal groups from the direct memory access controller 34 and 34', respectively. Each interface unit 31 and 31' can apply a control signal, TXEMPTY, to the coupled direct memory access unit. 34 and 34', respectively. The TXEMPTY signal indicates that the interface unit 31, 31' generating this signal is ready to receive signal groups from the coupled direct memory access unit 34, 34'. Each interface unit 31 and 31' is coupled to a conducting path for applying signal groups from the digital signal processor 20 and 20', in which the interface unit is located, to the direct memory access unit 24' and 24, located in the other digital signal processor, i.e., 31' and 31, respectively. In addition, each interface unit 31 and 31' can generate a control signal, RXFULL and RXFULL'. The RXFULL and RXFULL' control signals are applied to direct memory access unit 24' and 24, respectively, of the digital signal processor 30 and 30' that does not include the interface unit generating the control signal. The RXFULL and RXFULL signals indicate that the interface unit is ready to transmit signal groups stored therein to the other digital signal processor.

Each digital signal processor can also generate an INTERRUPT control signal and apply the INTERRUPT signal to the other digital signal processor. The purpose of this INTERRUPT signal, in the present invention, is to provide a mechanism for initiating the transfer of signal groups between processing units.

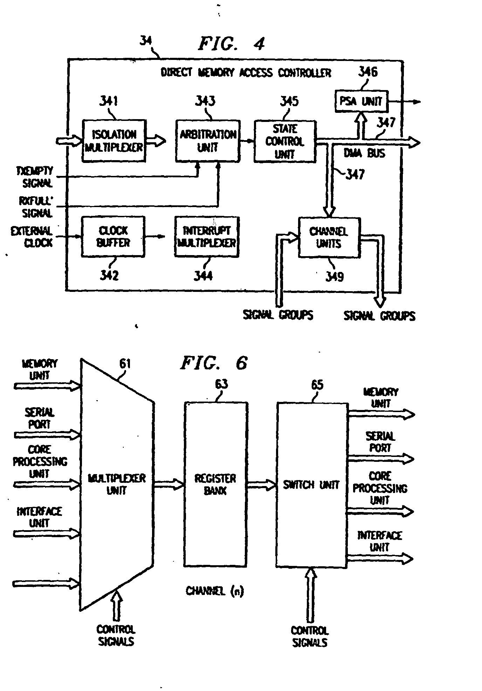

Referring to Fig.4, a block diagram of a direct memory access controller 34 according to the preferred embodiment of the present invention is shown. The direct memory access controller includes isolation multiplexer 341, a clock buffer unit 342, an arbitration unit 343, an interrupt multiplex unit 344, a state control unit 345, channel units 349 , a dma bus 347, and a PSA unit 346. The isolation multiplexer 341 includes the logic components to isolate the inputs to the direct memory access controller 34 for testing purposes. The clock buffer unit 342 contains logic to correct for the skew of the external (i.e. to the digital signal processor) clock signal. The clock signal from the clock buffer 342 is then distributed throughout the direct memory access controller 34. The interrupt multiplexer unit 344 provides synchronous interrupts to the core processing unit 12 of the digital signal processor 30. The arbitration logic 343 includes apparatus responsive to bids for control of one of the channels to select user for the transfer of signal groups through the direct memory access unit 34. The PSA unit 346 is a calculator for testing and for debugging the direct memory access controller 34. The state control unit 345, based on the signals from the arbitration unit 343, selects the state (configuration) of the direct memory access controller 34 and applies the control signals on dma bus 347 that implement the machine configuration for performance of the present operation. For purposes of the present invention, the important elements of the direct memory access controller 34 are arbitration unit 343, the state control unit 345 and the channel units 349. The signals TXEMPTY and RXFULL' are both applied to the arbitration unit 343. The purpose of the arbitration unit 343 is to resolve conflicts over assignment of channels. The arbitration unit 343 signals to the state control unit 345 the need to provide a channel for the transfer of signals. That is, for the TXEMPTY' signal, a channel is provided by the direct memory access unit 34' between the memory unit 16' and the interface unit 31'. For the RXFULL' signal, a channel is provided by the direct memory access unit 34 between the interface unit 31' and the memory unit 16. The source and destination addresses are transmitted by the dma bus 349. In addition, control signals on the dma bus 347 are applied to the channel units 349. The signal groups are transferred through one of the plurality channel units 349.

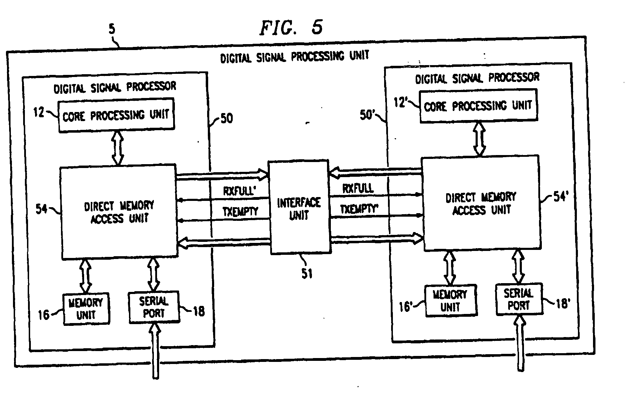

Referring to Fig. 5, a second embodiment of a digital signal processing unit 5 for the transfer of signal groups between digital signal processors 50 and 50', using essentially the same control signals and signal groups as shown in Fig. 3, is illustrated. In this second embodiment, as with the embodiment shown in Fig. 3, the signal groups that are transferred do not leave the chip upon which the digital signal processing unit 5 is fabricated. Instead, a single interface unit 51 is used. The single interface unit 51 is shown in Fig. 5 as not being positioned on either digital signal processor subchips 50 or 50', but is located between the two subchips. As will be clear, the interface unit 51 can be located on one of the subchips without departing from the present invention. The interface unit 51 can receive input signal groups from either memory unit 16 through direct memory access controller 54 or can receive signal groups from memory unit 16' through direct memory access controller 54'. Similarly, signal groups can be transferred from the interface unit 51 to memory unit 16 through direct memory access controller 54, while signal groups from interface unit 51 can be transferred to memory unit 16' through direct memory access controller 54'. The direct memory access controllers 54 and 54' can be implemented in the same manner as direct memory access controllers 34 and 34' of Fig. 3. That is, the response to the TXEMPTY, RXFULL, TXEMPTY', and RXFULL' control signals by either direct memory access controller 54 and 54' is the same as illustrated in Fig. 3. In order to avoid conflict for use of the interface unit 51, the receipt of an INTERRUPT signal identifying an exchange of signal groups will prevent the core processing unit receiving the INTERRUPT signal from issuing a (conflicting) INTERRUPT signal to the core processing unit from which the INTERRUPT signal originated.

Referring to Fig. 6, the operation of the channel units 349 of the direct memory access unit is illustrated. The channel units 349 includes a plurality of channels of which one is channel is shown in Fig. 6. Multiplexer 16 has coupled to input terminals thereof all of the source components of signal groups. As shown in the Fig. 6. the source components include the memory unit 16, the serial port 18, the core processing unit 12, and the interface unit 31'. Note that the input terminals are coupled to direct memory access unit 34' of the second digigital signal processor 30'. Control signals from the dma bus 347 select the source component to be transmitted through multiplexer unit 61. The signal groups transmitted through the multiplexer unit 61 are applied to and stored in the register bank 63. The signal group stored in the register bank 63 is applied to the switch unit 65. Switch unit 65, in response to control signals from the dma bus 349, transmitts the signal group and applies the signal group to one of the possible destination components, i.e., the memory unit 16, the serial port 18, the core processing unit 12 and to the interface unit 31 associated with the digital signal processor 30 in which the channel units 349 are located.

The operation of the present invention can be understood as follows. A software program of the first digital processing unit determines that a signal group or signal groups required by the core processing unit of the first digital processor is/are not currently stored in the memory unit of the first digital signal processor. The program also determines that the required signal groups are stored in the memory unit of a second digital signal processor. The core processing unit of the first digital signal processing unit sends an INTERRUPT signal to the core processing unit of the second digital signal processing unit. The INTERRUPT signal informs the second digital processing unit that an action for the first digital signal processing unit is required. The first digital signal processor forms an predetermined signal group and, when the interface unit is available, the predetermined signal group is applied through the direct memory access unit to the first interface unit of the first digital signal processor. This transfer of a signal group or groups to the interface unit is dependent on the application of a TXEMPTY signal by the interface unit to the direct memory access controller. The TXEMPTY signal indicates that interface unit is available for the storage of signal groups. When the TXEMPTY signal is generated, the predetermined signal group is then transferred to the interface unit. When the predetermined signal group is stored in the interface unit, the interface unit generates a RXFULL control signal and applies this signal to the direct memory access controller of the digital signal processor in which the required signal groups are stored. In response to the RXFULL control signal, the predetermined signal group is transferred to the direct memory access controller receiving the control signal. The direct memory access controller then forwards the predetermined signal group to the associated core processing unit. The core processing unit processes the predetermined signal group and determines the location in the associated memory unit of the signal groups requested by first digital signal processor.

The core processing unit then instructs the direct memory access controller to retrieve from memory the signal groups specified by the predetermined signal group and apply these signal groups to the associated interface unit. When a signal from the interface unit, TXEMPTY', indicates that the interface unit is ready to receive signal groups, the direct memory access controller transfers the requested signal groups from the memory unit to the interface unit. The interface unit generates a RXFULL' signal and applies this control signal to the direct memory access controller in the digital signal processing unit requesting signal groups. The direct memory access controller now stores the requested signal groups in the memory unit associated with the requesting core processing unit. The required signal groups are now available to the core processing unit.

As will be clear those skilled in the art, the forgoing implementation can be extended to a digital signal processing unit that includes more than two digital signal processors. The extension would include interrupt signal lines between all of the digital signal processors and signal group lines from each interface unit to all of the direct memory access units included in the other digital signal processors. It will be further clear that the interface unit associated with each digital signal processor is a temporary storage device. The interface unit is buffer storage unit facilitating the transfer of signal groups. The interface unit can be implemented by registers, e.g., a first-in, first-out type component, or any other device suitable for the temporary storage of signal groups to be transferred between digital signal processors.

For example, the foregoing might be applied to a digital signal processing unit comprising: at least a first and a second digital signal processor, each digital signal processor comprising: a core processing unit; at least one memory unit; at least one serial port; an interface unit, interface unit having data signal path to a second direct memory access unit of a second digital signal processor; and a direct memory access controller for controlling the exchange of signal groups between the other components, wherein when an interface unit can receive and store signal groups from the interface unit, the interface unit applies a first control signal to the direct memory access controller, wherein when the interface unit as signal groups to be transferred to the second digital signal processor, the interface unit applies a second control signal to the direct memory access controller of a second digital signal processor.

The digital signal processor may require a requested signal group, in which case the digital signal processing unit applies an interrupt signal to the second digital signal processor, or the digital signal processor may require a requested signal group stored the second digital signal processor, in which instance a predetermined signal group is transferred through the interface unit to the second direct memory access controller of the second digital signal processor. Preferably, the predetermined signal group identifies the requested signal group. The requested signal group may be transferred to the direct memory access controller of the first digital signal processor from the interface unit of the second digital signal processor. A single interface unit may be shared by the first and the second digital signal processor.

Alternatively, a data processing system may comprise: at least a first and a second digital signal processor, each digital signal processor comprising: a core processing unit; at least one memory unit; at least one serial port; and a direct memory access controller, the direct memory interface controller controlling the exchange of signal groups between the other components; and an interface unit, interface unit having data signal paths to the direct memory access controller of each digital signal processor, wherein the interface unit receives and stores signal groups from each of the direct memory access controllers when the interface unit applies a first control signal to the direct memory access controller, wherein the interface unit transfers signal groups to a direct memory access controller after application of a second control signal to the direct memory access controller.

## Claims

1. A data processing system comprising:
a first digital signal processing unit (3) including at least two digital signal processors (30, 30'), each digital signal processor comprising;
a core processing unit (12, 12');
at least one memory unit (16, 16') for storing signal groups;
at least one serial port (18, 18') for exchanging signals between the digital signal processor and external components;
a memory unit for storing signal groups to be processed by the core processing unit;
an interface unit (31, 31'); and
a direct management controller coupled to the core processing unit (12, 12'), the memory unit (16, 16'), the serial port (18, 18') and the interface unit (31, 31') of the digital signal processor;
**characterized in that** the interface unit (31, 31') of each digital signal processor (30, 30') is coupled to a direct memory access controller of the other digital processing unit (30', 30) via a dedicated connection.

2. The data processing system as recited in claim 1, wherein the interface unit is configured for receiving signal groups from the direct memory access controller of the digital signal processor and for applying signal groups to the direct memory access controller of the second digital processing unit.

3. The data processing system as recited in claim 2, wherein the interface unit is a temporary storage unit for storing signal groups to be transferred between digital signal processors.

4. The data processing system as recited in claim 2 or Claim 3, wherein the transfer of signal groups is initiated by an interrupt signal transferred between digital signal processors.

5. The data processing system as recited in claim 3 or Claim 4, wherein the interface unit is arranged for applying a control signal to the direct memory access controller of the digital signal processor when the interface unit is ready to store signal groups.

6. The data processing system as recited in any of claims 2 to 5, wherein the interface unit is arranged for applying a control signal to the direct memory access controller of a second digital signal processor when the interface unit is ready to transfer signal groups to the second digital signal processor.

7. The data processing system as recited in any of claims 4 to 6, wherein the interrupt signal is generated by the digital signal processor requiring a requested signal group, the digital signal processor requiring the requested signal group forming a predetermined signal group identifying the requested signal group, the predetermined signal group being transferred to the digital signal processor having the requested signal group through the interface unit of the digital signal processor requiring the requested signal group.

8. A method for transferring requested signal groups from a first digital signal processor (30) to a second digital signal processor (30') wherein each digital signal processor comprises an interface unit (31, 31') which is coupled to a direct memory access controller (34', 34) of the other digital signal processor (30', 30) via a dedicated connection, said method comprising:
when the direct memory access controller (34) of the first digital signal processor (30) receives a first control signal (TXEMPTY) from the interface unit (31) of the first digital signal processor (30) indicating that the interface unit is ready to receive signal groups, transferring the requested signal groups from the memory unit (16) of the first digital signal processor (30) to the interface unit (31) of the first digital signal processor,
when the requested signal groups are in the interface unit (31) of the first digital signal processor (30), applying a second control signal (RXFULL) from the interface unit (31) of the first digital signal processor (30) to the direct memory access controller (34') of the second digital signal processor (30'); and
after application of the second control signal (RXFULL), transferring the requested signal groups to the direct memory access controller (34') of the second digital signal processor (30').

9. The method as recited in claim 8 further comprising:
generating an interrupt signal with the second digital signal processor; and
initiating the transfer of the requested signal groups from the first digital signal processor to the second digital signal processor by applying the interrupt signal to the first digital signal processor.

10. The method as recited in claim 8 or claim 9 further comprising:
wherein after application of the interrupt signal to the first digital signal processor, the second digital signal processor sends a predetermined signal group to the first digital signal processor, the predetermined signal group identifying the requested signal groups.

11. The method as recited in claim 9 further comprising:
after applying the interrupt signal to the first digital signal processor, forming predetermined signal groups by the second processor;
storing the predetermined signal group in an interface unit of the second digital signal processor when the interface unit of the second digital processor has applied a first control signal to the direct memory access controller of the second digital signal processor;
applying a second control signal by the interface unit of the second digital signal processor to the direct memory access controller of the first digital signal processor; and
transferring the predetermined signal group to the direct memory access controller of the first digital signal processor.

## Patentansprüche

1. Datenverarbeitungssystem, das folgendes umfasst:
eine erste digitale Signalverarbeitungseinheit (3), die mindestens zwei Einrichtungen zur digitalen Signalverarbeitung (30, 30') beinhaltet, wobei jede Einrichtung zur digitalen Signalverarbeitung folgendes umfasst:
eine Kernverarbeitungseinheit (12, 12');
mindestens eine Speichereinheit (16, 16') für die Speicherung von Signalgruppen;
mindestens einen seriellen Anschluss (18, 18') für den Austausch von Signalen zwischen dem digitalen Signalprozessor und externen Komponenten;
eine Speichereinheit für die Speicherung von Signalgruppen, die von der Kernverarbeitungseinheit verarbeitet werden sollen;
eine Schnittstelleneinheit (31, 31'); und
einen direkten Verwaltungskontroller, der mit der Kernverarbeitungseinheit (12, 12'), der Speichereinheit (16, 16'), dem seriellen Anschluss (18, 18') und der Schnittstelleneinheit (31, 31') der Einrichtung zur digitalen Signalverarbeitung gekoppelt ist;
**dadurch gekennzeichnet, dass** die Schnittstelleneinheit (31, 31') jeder Einrichtung zur digitalen Signalverarbeitung (30, 30') über eine dedizierte Verbindung mit einem Direkt-Speicherzugriffskontroller der anderen digitalen Signalverarbeitungseinheit (30', 30) gekoppelt ist.

2. Datenverarbeitungssystem wie in Anspruch 1 angegeben, bei dem die Schnittstelleneinheit so konfiguriert ist, dass sie Signalgruppen vom Direkt-Speicherzugriffskontroller der Einrichtung zur digitalen Signalverarbeitung empfangen und Signalgruppen an den Direkt-Speicherzugriffskontroller der zweiten digitalen Signalverarbeitungseinheit anlegen kann.

3. Datenverarbeitungssystem wie in Anspruch 2 angegeben, bei dem die Schnittstelleneinheit eine temporäre Speichereinheit für die Speicherung von Signalgruppen, die zwischen Einrichtungen zur digitalen Signalverarbeitung zu übertragen sind, darstellt.

4. Datenverarbeitungssystem wie in Anspruch 2 oder Anspruch 3 angegeben, bei dem die Übertragung der Signalgruppen von einem zwischen Einrichtungen zur digitalen Signalverarbeitung übertragenen Unterbrechungssignal initiiert wird.

5. Datenverarbeitungssystem wie in Anspruch 3 oder Anspruch 4 angegeben, bei dem die Schnittstelleneinheit so angeordnet ist, dass sie ein Steuersignal an den Direkt-Speicherzugriffskontroller der Einrichtung zur digitalen Signalverarbeitung anlegt, wenn die Schnittstelleneinheit bereit ist, Signalgruppen zu speichern.

6. Datenverarbeitungssystem wie in einem der Ansprüche 2 bis 5 angegeben, bei dem die Schnittstelleneinheit so angeordnet ist, dass sie ein Steuersignal an den Direkt-Speicherzugriffskontroller einer zweiten Einrichtung zur digitalen Signalverarbeitung anlegt, wenn die Schnittstelleneinheit bereit ist, Signalgruppen an die zweite Einrichtung zur digitalen Signalverarbeitung zu übertragen.

7. Datenverarbeitungssystem wie in einem der Ansprüche 4 bis 6 angegeben, bei dem das Unterbrechungssignal von der Einrichtung zur digitalen Signalverarbeitung erzeugt wird, die eine angeforderte Signalgruppe benötigt, wobei die Einrichtung zur digitalen Signalverarbeitung, die die angeforderte Signalgruppe benötigt, eine vorher festgelegte Signalgruppe bildet, die die angeforderte Signalgruppe identifiziert, wobei die vorher festgelegte Signalgruppe an diejenige Einrichtung zur digitalen Signalverarbeitung übertragen wird, die die angeforderte Signalgruppe umfasst, und zwar durch die Schnittstelleneinheit der Einrichtung zur digitalen Signalverarbeitung, die die angeforderte Signalgruppe benötigt.

8. Verfahren für die Übertragung angeforderter Signalgruppen von einer ersten Einrichtung zur digitalen Signalverarbeitung (30) an eine zweite Einrichtung zur digitalen Signalverarbeitung (30'), wobei jede Einrichtung zur digitalen Signalverarbeitung eine Schnittstelleneinheit (31, 31') umfasst, die über eine dedizierte Verbindung mit einem Direkt-Speicherzugriffskontroller (34', 34) der anderen Einrichtung zur digitalen Signalverarbeitung (30', 30) gekoppelt ist, wobei das Verfahren folgendes umfasst:
wenn der direkte Speicherzugriffskontroller (34) der ersten Einrichtung zur digitalen Signalverarbeitung (30) ein erstes Steuersignal (TXEMPTY) von der Schnittstelleneinheit (31) der ersten Einrichtung zur digitalen Signalverarbeitung (30) empfängt, das anzeigt, dass die Schnittstelleneinheit bereit ist, Signalgruppen zu empfangen, werden die angeforderten Signalgruppen von der Speichereinheit (16) der ersten Einrichtung zur digitalen Signalverarbeitung (30) an die Schnittstelleneinheit (31) der ersten Einrichtung zur digitalen Signalverarbeitung übertragen,
wenn sich die angeforderten Signalgruppen in der Schnittstelleneinheit (31) der ersten Einrichtung zur digitalen Signalverarbeitung (30) befinden, wird ein zweites Steuersignal (RXFULL) von der Schnittstelleneinheit (31) der ersten Einrichtung zur digitalen Signalverarbeitung (30) an den Direkt-Speicherzugriffskontroller (34') der zweiten Einrichtung zur digitalen Signalverarbeitung (30') angelegt; und
nachdem das zweite Steuersignal (RXFULL) angelegt wurde, werden die angeforderten Signalgruppen an den Direkt-Speicherzugriffskontroller (34') der zweiten Einrichtung zur digitalen Signalverarbeitung (30') übertragen.

9. Verfahren wie in Anspruch 8 angegeben, das ferner folgendes umfasst:
Erzeugung eines Unterbrechungssignals mit der zweiten Einrichtung zur digitalen Signalverarbeitung; und
Initiierung der Übertragung der angeforderten Signalgruppen von der ersten Einrichtung zur digitalen Signalverarbeitung an die zweite Einrichtung zur digitalen Signalverarbeitung durch Anlegen des Unterbrechungssignals an die erste Einrichtung zur digitalen Signalverarbeitung.

10. Verfahren wie in Anspruch 8 oder Anspruch 9 angegeben, das ferner folgendes umfasst:
nach Anlegen des Unterbrechungssignals an die erste Einrichtung zur digitalen Signalverarbeitung, erfolgendes Senden einer vorher festgelegten Signalgruppe an die erste Einrichtung zur digitalen Signalverarbeitung durch die zweite Einrichtung zur digitalen Signalverarbeitung, wobei die vorher festgelegte Signalgruppe die angeforderte Signalgruppe identifiziert.

11. Verfahren wie in Anspruch 9 angegeben, das ferner folgendes umfasst:
nach Anlegen des Unterbrechungssignals an die erste Einrichtung zur digitalen Signalverarbeitung, erfolgende Bildung von vorher festgelegten Signalgruppen durch die zweite Einrichtung;
Speicherung der vorher festgelegten Signalgruppe in einer Schnittstelleneinheit der zweiten Einrichtung zur digitalen Signalverarbeitung, wenn die Schnittstelleneinheit der zweiten Einrichtung zur digitalen Signalverarbeitung ein erstes Steuersignal an den Direkt-Speicherzugriffskontroller der zweiten Einrichtung zur digitalen Signalverarbeitung angelegt hat;
Anlegen eines zweiten Steuersignals an den Direkt-Speicherzugriffskontroller der ersten Einrichtung zur digitalen Signalverarbeitung durch die Schnittstelleneinheit der zweiten Einrichtung zur digitalen Signalverarbeitung; und
Übertragung der vorher festgelegten Signalgruppe an den Direkt-Speicherzugriffskontroller der ersten Einrichtung zur digitalen Signalverarbeitung.

## Revendications

1. Système de traitement de données comprenant :
une première unité de traitement de signaux numériques (3) incluant au moins deux processeurs de signaux numériques (30, 30'), chaque processeur de signaux numériques comprenant :
une unité centrale de traitement (12, 12') ;
au moins une unité de mémoire (16, 16') pour le stockage de groupes de signaux ; au moins un port série (18, 18') pour l'échange de signaux entre le processeur de signaux numériques et des composants externes ;
une unité de mémoire pour le stockage de groupes de signaux à traiter par l'unité centrale de traitement ;
une unité d'interface (31, 31') ; et
une unité de commande de gestion directe reliée à l'unité centrale de traitement (12, 12'), l'unité de mémoire (16, 16'), le port série (18, 18') et l'unité d'interface (31, 31') du processeur de signaux numériques ;
**caractérisé en ce que** l'unité d'interface (31, 31') de chaque processeur de signaux numériques (30, 30') est reliée à une unité de commande d'accès direct à la mémoire de l'autre unité de traitement de signaux numériques (30, 30') par l'intermédiaire d'une connexion spécialisée.

2. Système de traitement de données selon la revendication 1, dans lequel l'unité d'interface est configurée pour recevoir des groupes de signaux provenant d'une unité de commande d'accès direct à la mémoire du processeur de signaux numériques et pour appliquer les groupes de signaux à l'unité de commande d'accès direct à la mémoire de la deuxième unité de traitement de signaux numériques.

3. Système de traitement de données selon la revendication 2, dans lequel l'unité d'interface est une unité de stockage temporaire pour le stockage de groupes de signaux à transférer entre les processeurs de signaux numériques.

4. Système de traitement de données selon la revendication 2 ou la revendication 3, dans lequel le transfert de groupes de signaux est déclenché par un signal d'interruption transféré entre les processeurs de signaux numériques.

5. Système de traitement de données selon la revendication 3 ou la revendication 4, dans lequel l'unité d'interface est conçue pour appliquer un signal de commande à l'unité de commande d'accès direct à la mémoire du processeur de signaux numériques lorsque l'unité d'interface est prête à stocker des groupes de signaux.

6. Système de traitement de données selon l'une quelconque des revendications 2 à 5, dans lequel l'unité d'interface est conçue pour appliquer un signal de commande à l'unité de commande d'accès direct à la mémoire d'un deuxième processeur de signaux numériques lorsque l'unité d'interface est prête à transférer des groupes de signaux au deuxième processeur de signaux numériques.

7. Système de traitement de données selon l'une quelconque des revendications 4 à 6, dans lequel le signal d'interruption est produit par le processeur de signaux numériques ayant besoin d'un groupe demandé de signaux, le processeur de signaux numériques ayant besoin d'un groupe demandé de signaux formant un groupe prédéterminé de signaux identifiant le groupe demandé de signaux, le groupe prédéterminé de signaux étant transféré au processeur de signaux numériques ayant le groupe demandé de signaux à travers l'unité d'interface du processeur de signaux numériques ayant besoin du groupe demandé de signaux.

8. Procédé de transfert de groupes demandés de signaux entre un premier processeur de signaux numériques (30) et un deuxième processeur de signaux numériques (30') dans lequel chaque processeur de signaux numériques comprend une unité d'interface (31, 31') qui est reliée à une unité de commande d'accès direct à la mémoire (34', 34) de l'autre processeur de signaux numériques (30', 30) par l'intermédiaire d'une connexion spécialisée, procédé comprenant :
lorsque l'unité de commande d'accès direct à la mémoire (34) du premier processeur de signaux numériques (30) reçoit un premier signal de commande (TXEMPTY) de l'unité d'interface (31) du premier processeur de signaux numériques (30) indiquant que l'unité d'interface est prête à recevoir des groupes de signaux, le transfert des groupes demandés de signaux entre l'unité de mémoire (16) du premier processeur de signaux numériques (30) et l'unité d'interface (31) du premier processeur de signaux numériques,
lorsque les groupes demandés de signaux sont dans l'unité d'interface (31) du premier processeur de signaux numériques (30), l'application d'un deuxième signal de commande (RXFULL) entre l'unité d'interface (31) du premier processeur de signaux numériques (30) et l'unité de commande d'accès direct à la mémoire (34') du deuxième processeur de signaux numériques (30') ; et
après application du deuxième signal de commande (RXFULL), le transfert des groupes demandés de signaux à l'unité de commande d'accès direct à la mémoire (34') du deuxième processeur de signaux numériques (30').

9. Procédé selon la revendication 8, comprenant de plus :
la production d'un signal d'interruption par le deuxième processeur de signaux numériques ; et
le déclenchement du transfert des groupes demandés de signaux entre le premier processeur de signaux numériques et le deuxième processeur de signaux numériques par application du signal d'interruption au premier processeur de signaux numériques.

10. Procédé selon la revendication 8 ou la revendication 9, dans lequel après application du signal d'interruption au premier processeur de signaux numériques, le deuxième processeur de signaux numériques envoie un groupe prédéterminé de signaux au premier processeur de signaux numériques, le groupe prédéterminé de signaux identifiant les groupes demandés de signaux.

11. Procédé selon la revendication 9 comprenant de plus :
après application du signal d'interruption au premier processeur de signaux numériques, la formation de groupes prédéterminés de signaux par le deuxième processeur ;
le stockage du groupe prédéterminé de signaux dans une unité d'interface du deuxième processeur de signaux numériques lorsque l'unité d'interface du deuxième processeur de signaux numériques a appliqué un premier signal de commande à l'unité de commande d'accès direct à la mémoire du deuxième processeur de signaux numériques ;
l'application d'un deuxième signal de commande par l'unité d'interface du deuxième processeur de signaux numériques à l'unité de commande d'accès direct à la mémoire du premier processeur de signaux numériques ; et
le transfert du groupe prédéterminé de signaux à l'unité de commande d'accès direct à la mémoire du premier processeur de signaux numériques.
